**Europäisches Patentamt**

**European Patent Office**

**Office européen des brevets**

(19)

(11) Veröffentlichungsnummer: **0 170 178**
**B1**

(12) ## EUROPÄISCHE PATENTSCHRIFT

(45) Veröffentlichungstag der Patentschrift:
**24.05.89**

(21) Anmeldenummer: **85109100.9**

(22) Anmeldetag: **20.07.85**

(51) Int. Cl.⁴: **B 29 C  33/52**, B 29 C  61/00 //
B29K105:06, B29L23:00

(54) **Entfernbarer Kern zur Herstellung rohrförmiger Strukturen aus Faserverbundwerkstoffen.**

(30) Priorität: **01.08.84  DE 3428282**

(43) Veröffentlichungstag der Anmeldung
**05.02.86 Patentblatt 86/6**

(45) Bekanntmachung des Hinweises auf die Patenterteilung:
**24.05.89 Patentblatt 89/21**

(84) Benannte Vertragsstaaten:
**AT FR GB NL**

(56) Entgegenhaltungen:
**DE-A- 1 604 528**
**DE-A- 1 925 843**
**DE-A- 1 927 538**
**FR-A- 2 079 170**
**US-A- 2 886 853**
**US-A- 3 136 831**
**US-A- 4 155 970**

(73) Patentinhaber: **Deutsche Forschungs- und
Versuchsanstalt für Luft- und Raumfahrt e.V., Linder
Höhe Postfach 90 60 58, D-5000 Köln 90 (DE)**

(72) Erfinder: **Schütze, Rainer, Dipl.-Ing., Am Klei 14A,
D-3300 Braunschweig (DE)**

(74) Vertreter: **Gralfs, Harro, Dipl.-Ing., Am Bürgerpark 8,
D-3300 Braunschweig (DE)**

## Beschreibung

Die Erfindung bezieht sich auf einen entfernbaren Kern aus einem unter Wärmeeinwirkung erweichenden oder schrumpfenden Schaumstoff zur Herstellung rohrförmiger Strukturen aus Faserverbundwerkstoffen.

Bekannt ist die Verwendung von Schaumstoffkernen zum Herstellen mehrwandiger stabiler Flugzeugteile, insbesondere von Hubschrauber-Rotoren. Auf dem Schaumstoffkern werden dabei die Strukturen aufgebaut. Anschliessend wird der Kern herausgelöst (DE-B 1 219 665). Schaumstoffkerne haben nur eine geringe Biegesteifigkeit, so dass es notwendig ist, die Kerne beim Aufbringen der Faserverbundwerkstoffe abzustützen. Darüber hinaus haben sie auch bei Verwendung von üblichen Trennmitteln eine rauhe Oberfläche, die am Werkstück abgebildet wird. Schliesslich ist das Herauslösen eines solchen Schaumstoffkerns aufwendig.

Bekannt ist es ferner, für die Herstellung von Hohlkörpern aus Faserverbundwerkstoffen Kerne zu verwenden, die aus Kunststoffen bestehen, die durch Einwirkung von innerem Druck und Wärme in einer Mutterform in eine vorgegebene Form bringbar sind, die sie nach dem Abkühlen beibehalten. Bei erneuter Erwärmung ohne innere Abstützung erfolgt dabei ein Schrumpfen des Kerns auf die ursprüngliche Form. Derartige Kerne müssen starkwandig mit einer Wandstärke von mehreren Millimetern ausgebildet sein, damit beim Aufbringen der Verbundfasern, die dabei auftretenden Kräfte aufgenommen werden können (AT-B 189 793).

Für die kontinuierliche Herstellung rohrförmiger Körper ist es weiter bekannt, einen Wickeldorn vorzusehen, der aus einer eutektischen Metallegierung mit niedrigem Schmelzpunkt besteht. Auf diesen kontinuierlich extrudierten Kern wird die rohrförmige Faserverbundstruktur aufgebracht und kontinuierlich abgezogen. Der Kern wird dabei an seinem freien Ende zum Abschmelzen gebracht, wobei das abgeschmolzene Metall innerhalb des Kernrohres zurückläuft. Eine solche Anordnung ist ausserordentlich aufwendig (DE-B 1 192 396).

Für die Herstellung von kuppelförmigen Strukturen mit durchgehenden Hohlräumen im Bereich der Kuppelwandung sind Bleikerne bekannt, die mit einem Schrumpfschlauch umgeben sind. Diese Bleikerne werden in die Aussenform eingelegt und an diese angepasst. Diese Bleikerne werden durch Erwärmung der Struktur auf die Schmelztemperatur des Bleis herausgelöst. Alle Bleireste verbleiben in dem Schrumpfschlauch, der dann zusammen mit den Bleiresten aus den gebildeten Hohlräumen herausgezogen wird (US-A 4 155 970).

Es sind weiter verlorene Modelle für Giessformen aus Kunststoff bekannt, die aus Stäben und Platten in Hohlbauweise bestehen, wobei die Stäbe und Platten auch aus Schaumstoff bestehen können. Diese Modelle werden in Formsand oder ähnlichen Formstoffen eingebettet und hierin durch Anwendung von Hitze verbrannt oder vergast und so der Formhohlraum für die Giessschmelze gebildet. Zur Herstellung einer glatten Oberfläche ist es dabei bekannt, auf das Modell aussen eine Folie aufzubringen (DE-A 1 927 538).

Ferner ist es bekannt, geformte Schaumstoffkerne für die Herstellung von Strukturen aus faserverstärktem Kunststoff zu verwenden und diese Schaumstoffkerne anschliessend aus der fertigen Struktur herauszulösen, wobei der Kern selbst seinerseits hohl ausgebildet ist (FR-A 2 079 170).

Aufgabe der Erfindung ist es, einen Schaumstoffkern zu schaffen, der auch bei rohrförmigen Strukturen grosser Streckung, das ist eines grossen Verhältnisses von Länge zu Durchmesser, verwendbar ist und leicht aus dem fertigen Werkstück lösbar ist, wobei der Kern eine hohe Steifigkeit und Formstabilität haben soll.

Diese Aufgabe wird gemäss der Erfindung dadurch gelöst, dass der aus Schaumstoff bestehende Kern aussen mit einem Schrumpfschlauch als Überzug versehen ist.

Ein solcher Kern ist leicht herstellbar, er besitzt eine grosse Formsteifigkeit und glatte Oberfläche und ist leicht lösbar.

Die Erfindung ist in der Zeichnung beispielsweise veranschaulicht und im nachstehenden im einzelnen anhand der Zeichnung beschrieben.

Fig. 1 zeigt einen Querschnitt durch eine rohrförmige Struktur aus einem Faserverbundwerkstoff mit einem entfernbaren Schaumstoffkern.

Fig. 2 zeigt schematisch die Struktur mit dem durch Wärmeeinwirkung kollabierten Kern.

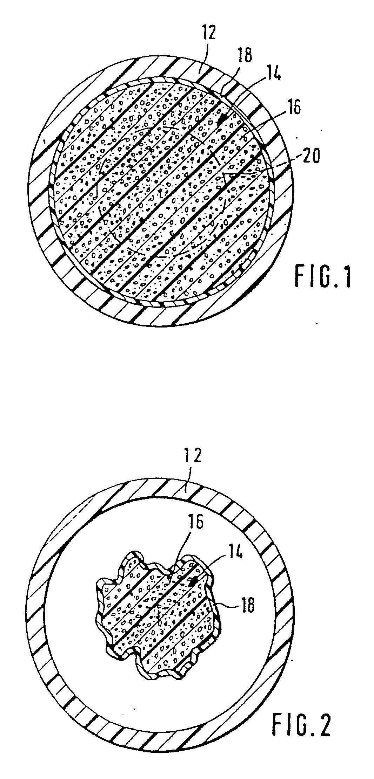

Der in Fig. 1 dargestellte Kern 14 weist einen aus einem Schaumstoff bestehenden Innenkern 16 auf, der aussen mit einem Schrumpfschlauch 18 überzogen ist.

Der Innenkern 16 besteht aus einem harten Schaumstoff, der dem Innenkern quer zu seiner Längserstreckung eine hohe Formstabilität verleiht. Das Material des Schaumstoffkerns ist weiter so auszuwählen, dass der Schaumstoffkern, unter Wärmeeinwirkung erweicht oder schrumpft. Der Innenkern kann beispielsweise aus einem geschäumten feinporigen Polystyrol bestehen. Der Schaumstoffkern sollte eine genaue geometrische Form haben, da diese die Form der rohrförmigen Struktur bestimmt. Die genaue Form des Schaumstoffkerns kann beispielsweise durch Schleifen hergestellt werden.

Bei der Herstellung des Kerns wird der auf genaue Form gebrachte Innenkern 16 mit einem Schrumpfschlauch 18 überzogen, der so ausgewählt ist, dass er durch Teilschrumpfung zur dichten Anlage auf dem äusseren Umfang des Innenkerns zur Anlage kommt. Da der Schaumstoffkern bei Umgebungstemperatur eine relativ hohe Druckfestigkeit hat, ist die Spannung des Schrumpfschlauches nach der Teilschrumpfung nicht kritisch. Der Schrumpfschlauch kann z.B.

aus einem hart eingestellten Polyvinylchlorid bestehen und eine Wandstärke von etwa 0,1 mm haben.

Für die Herstellung von Kernen mit einem Aussendurchmesser von 18 mm kann ein Schrumpfschlauch mit einem Durchmesser von 27 mm verwendet werden, der zunächst bis auf den 17,8 mm betragenden Durchmesser des Schaumstoffkernes auf diesen Kern aufgeschrumpft wird. Bei Aufschrumpfen wird der Schrumpfschlauch auf eine Temperatur von etwa 100°C erwärmt. Diese Erwärmung wird beginnend an einem Ende des Kerns mit einem ringförmigen Heizelement vorgenommen, beispielsweise einem ringförmigen Heissluftgebläse oder ringförmig angeordneten Heissluftgebläsen. Der Schrumpfschlauch wird dann bei einer Relativbewegung zwischen Heizelement und Kern in dessen Längsrichtung fortlaufend zur Anlage an den Schaumstoffkern gebracht, so dass Lufteinschlüsse vermieden werden. Der Schrumpfschlauch 18 gibt dem Kern aussen eine sehr glatte Oberfläche und dem Kern darüber hinaus eine hohe Steifigkeit und Formstabilität. Auf die Oberfläche wird gegebenenfalls nach Aufbringen eines Trennmittels in üblicher Weise die rohrförmige Stuktur 12 aus Faserverbundwerkstoffen aufgebaut.

Nach dem Aushärten der rohrförmigen Struktur wird diese mit dem darin befindlichen Kern auf eine Temperatur aufgeheizt, bei der der Schaumstoff erweicht oder schrumpft. Dies kann beispielsweise eine Erwärmung auf etwa 130°C zum endgültigen Aushärten des Kunstharzes in dem aufgebrachten Faserverbundwerkstoff sein.

Bei dieser Erwärmung schrumpft der Schrumpfschlauch auf dem bei der Erwärmung auf etwa 130°C erweichenden Kern auf einen Durchmesser von etwa 13 mm. Unter den dabei auftretenden Umfangsspannungen wird der Innenkern zusammengedrückt. Die Form des Kerns ist dann sehr unregelmässig und entspricht etwa der in Fig. 2 dargestellten. Der Kern löst sich dabei von der Innenwand der rohrförmigen Struktur, so dass er leicht herausgezogen werden kann.

Der aus Schaumstoff bestehende Innenkern 16 kann massiv ausgebildet sein. Er kann aber auch, wie in Fig. 1 durch den gestrichelten Kreis 20 angedeutet, hohl ausgebildet sein.

Kerne, wie sie im vorstehenden beschrieben sind, können auch gekrümmt ausgebildet sein. Sie können beispielsweise beim ersten Schrumpfen des Schrumpfschlauches mit erweichtem Schrumpfschlauch nach einer Formschablone gebogen werden. Nach Abkühlung des Schrumpfschlauches ist der Kern in der vorgegebenen Form formstabil. Die auf dem Kern aufgebrachte rohrförmige Struktur aus Faserverbundwerkstoffen bildet diese Form des Kernes ab.

Zum Entformen des Kerns wird dieser wie oben beschrieben auf eine Temperatur erwärmt, bei der er kollabiert und sich von der Innenwandung der rohrförmigen Struktur löst. Der kollabierte Kern kann auch aus gekrümmten rohrförmigen Strukturen leicht entfernt werden. Bei engen Biegeradien erfolgt das Herausziehen des kollabierten Kerns zweckmässig in Wärme, beispielsweise bevor der Schrumpfschlauch nach dem Kollabieren des Kerns wieder abkühlt und erhärtet.

## Patentansprüche

1. Entfernbarer Kern aus einem unter Wärmeeinwirkung erweichenden oder schrumpfenden Schaumstoff zur Herstellung rohrförmiger Strukturen aus Faserverbundwerkstoffen, dadurch gekennzeichnet, dass der Kern (14) aussen mit einem Schrumpfschlauch (18) als Überzug versehen ist.

2. Entfernbarer Kern nach Anspruch 1, dadurch gekennzeichnet, dass der Kern (16) hohl ausgebildet ist.

## Claims

1. A removable core consisting of a cellular material which softens or shrinks under the action of heat, for the production of tubular structures made of fibre composites, characterised in that the core (14) is provided externally with a heat-shrinkable sleeve (18) as a covering.

2. A removable core according to Claim 1, characterised in that the core (16) is made hollow.

## Revendications

1. Noyau amovible formé par un matériau mousse se ramollissant ou se rétractant sous l'action de la chaleur, pour la fabrication de structures tubulaires réalisées en des matériaux composites fibreux, caractérisé en ce que le noyau (14) comporte un revêtement extérieur constitué par un tuyau rétractable (18).

2. Noyau amovible selon la revendication 1, caractérisé en ce que le noyau (16) est creux.

FIG.1

FIG.2